# EUROPÄISCHE PATENTANMELDUNG

(11) **EP 4 793 492 A1**
(43) Veröffentlichungstag der Anmeldung: **19.08.2026**
(21) Anmeldenummer: 26154832.5
(22) Anmeldetag: 28.01.2026
(51) Int. Cl.: F03D 7/02, F03D 17/00

(54) **VERFAHREN ZUM REGELN EINER WINDKRAFTANLAGE SOWIE VORRICHTUNG, COMPUTERPROGRAMM UND SPEICHERMEDIUM ZUM DURCHFÜHREN DES VERFAHRENS**

(30) Priorität: 12.02.2025 DE 102025105204
(71) Anmelder: Dezibel Engineering GmbH, 80337 München (DE)
(72) Erfinder: Fischer, Achim, 80337 München (DE)
(74) Vertreter: PATERIS PartmbB

(57) **Zusammenfassung**

Die Erfindung betrifft ein Verfahren zum Regeln einer Windkraftanlage (1), die einen Rotor (8) aufweist, mit den Schritten: a) Rotieren des Rotors (8) in einem ersten Schallmodus und Aufnehmen eines ersten Schallsignals (*p*₁), das ein erstes von der Windkraftanlage (1) in dem ersten Schallmodus verursachtes Geräusch und ein Nebengeräusch enthält, das nicht von der Windkraftanlage (1) stammt, an einem Immissionsort (4); e) Rotieren des Rotors (8) in einem zweiten Schallmodus und Aufnehmen eines zweiten Schallsignals (*p*₂), das ein zweites von der Windkraftanlage (1) in dem zweiten Schallmodus verursachtes Geräusch und das Nebengeräusch enthält, an dem Immissionsort (4), wobei das zweite Geräusch verschieden von dem ersten Geräusch ist; g) Bestimmen für den Immissionsort (4) einer charakteristischen Größe des ersten Geräuschs aus dem ersten Schallsignal (*p*₁) und dem zweiten Schallsignal (*p*₂); h) Wählen eines Zielschallmodus unter Heranziehen der charakteristischen Größe des ersten Geräuschs und eines Immissionsrichtwerts (IRW); i) Rotieren des Rotors (8) in dem Zielschallmodus.

## Beschreibung

Die Erfindung betrifft ein Verfahren zum Regeln einer Windkraftanlage sowie eine Vorrichtung, ein Computerprogramm und ein Speichermedium zum Durchführen des Verfahrens.

Eine Windkraftanlage emittiert in deren Betrieb einen Schall. Rechtliche Auflagen, wie beispielsweise die sechste Allgemeine Verwaltungsvorschrift zum Bundes-Immissionsschutzgesetz (Technische Anleitung zum Schutz gegen Lärm - TA Lärm), geben eine Begrenzung eines Schalldruckpegels vor, der an einem Immissionsort von der Windkraftanlage eingetragen werden darf. In der TA Lärm wird beispielsweise ein Immissionsrichtwert IRW angegeben. Wird der Immissionsrichtwert überschritten, so muss die Windkraftanlage heruntergeregelt werden oder sogar abgeschaltet werden. Dies führt dazu, dass die Windkraftanlage nicht ihr volles Potential zur Stromerzeugung ausschöpft. An dem Immissionsort kann eine Überlagerung von verschiedenen Geräuschquellen vorliegen. Beispielsweise kann neben dem Geräusch der Windkraftanlage auch ein Geräusch von Gewerbe- und/oder Industrieanlagen vorliegen. Zudem kann ein Verkehrsgeräusch vorliegen oder je nach Wetterbedingungen kann auch ein Wind hörbar sein. Die anderen Geräuschquellen können viel intensiver als das Geräusch der Windkraftanlage sein. Trotzdem kann es in solchen Situationen erforderlich sein, die Windkraftanlage herunter zu regeln oder auszuschalten, wodurch die Windkraftanlage nicht ihr volles Potential zur Stromerzeugung ausschöpfen kann.

Aufgabe der Erfindung ist es daher, ein Verfahren zum Regeln einer Windkraftanlage zu schaffen, mit der eine große Menge an Strom von der Windkraftanlage erzeugt werden kann. Zudem ist es Aufgabe der Erfindung, eine Vorrichtung, ein Computerprogramm und ein Speichermedium zum Durchführen des Verfahrens zu schaffen.

Das erfindungsgemäße Verfahren zum Regeln einer Windkraftanlage, die einen Rotor aufweist, weist die Schritte auf: a) Rotieren des Rotors in einem ersten Schallmodus und Aufnehmen eines ersten Schallsignals, das ein erstes von der Windkraftanlage in dem ersten Schallmodus verursachtes Geräusch und ein Nebengeräusch enthält, das nicht von der Windkraftanlage stammt, an einem Immissionsort; e) Rotieren des Rotors in einem zweiten Schallmodus und Aufnehmen eines zweiten Schallsignals, das ein zweites von der Windkraftanlage in dem zweiten Schallmodus verursachtes Geräusch und das Nebengeräusch enthält, an dem Immissionsort, wobei das zweite Geräusch verschieden von dem ersten Geräusch ist; g) Bestimmen für den Immissionsort einer charakteristischen Größe des ersten Geräuschs aus dem ersten Schallsignal und dem zweiten Schallsignal; h) Wählen eines Zielschallmodus unter Heranziehen der charakteristischen Größe des ersten Geräuschs und eines Immissionsrichtwerts IRW; i) Rotieren des Rotors in dem Zielschallmodus.

Dadurch, dass in dem Schritt e) der Rotor rotiert und nicht etwa zum Stillstand gebracht wird, kann die Windkraftanlage auch während des Schritts e) Strom erzeugen. Zudem führt das Rotieren des Rotors in dem Schritt e) zu einer geringeren mechanischen Belastung der Windkraftanlage im Vergleich dazu, in dem Schritt e) den Rotor zu dem Stillstand zu bringen, wodurch die Lebensdauer der Windkraftanlage vorteilhaft lang ist. Indem in dem Schritt a) und e) die voneinander verschiedenen ersten und zweiten Geräusche erzeugt werden, ist es möglich, in dem Schritt g) auf die charakteristische Größe zurück zu schließen. Beispielsweise in dem Fall, dass anhand der charakteristischen Größe des ersten Geräusches festgestellt wird, dass das Nebengeräusch besonders laut ist, kann der Zielschallmodus in dem Schritt h) lauter und mit einer größeren Nennleistung der Windkraftanlage gewählt werden, als wenn die charakteristische Größe des ersten Geräuschs unbekannt wäre. So ist es bei einem besonders lauten Nebengeräusch denkbar, dass rechtliche Auflagen eine Überschreitung des Immissionsrichtwerts IRW erlauben. Durch den Zielschallmodus mit der größeren Nennleistung der Windkraftanlage kann die Windkraftanlage eine besonders große Menge an Strom erzeugen. Bei dem ersten Schallsignal und dem zweiten Schallsignal kann es sich beispielsweise jeweils um einen zeitabhängigen Schalldruck handeln. Es ist denkbar, dass das erste Schallsignal aus dem ersten Geräusch und dem Nebengeräusch besteht und das zweite Schallsignal aus dem zweiten Geräusch und dem Nebengeräusch besteht. Der zweite Schallmodus ist verschieden von dem ersten Schallmodus.

Ein Hersteller der Windkraftanlage stellt herkömmlich eine Liste mit verschiedenen Schallmodi bereit. Eine beispielhafte Liste mit den Schallmodi ist untenstehend wiedergegeben, wobei die Nennleistungen P der Windkraftanlage und die Schallleistungspegel *L*_{WA} der Windkraftanlageangegeben sind:

| | Nennleistung *P* [kW] | *L*_{WA} [dB] |
|---|---|---|
| Schallmodus 0 | P₀ | L₀ |
| Schallmodus 1 | P₁ | L₁ |
| Schallmodus 2 | P₂ | L₂ |
| Schallmodus 3 | P₃ | L₃ |
| Schallmodus 4 | P₄ | L₄ |
| Schallmodus 5 | P₅ | L₅ |
| Schallmodus 6 | P₆ | L₆ |
| Schallmodus 7 | P₇ | L₇ |
| Schallmodus 8 | P₈ | L₈ |
| Schallmodus 9 | P₉ | L₉ |

Der Schallleistungspegel *L*_{WA} bezeichnet dabei in üblicher Weise den Pegel einer von der Windkraftanlage pro Zeitspanne abgegebenen Schallenergie, d.h. den Pegel der Schallleistung.

Die unterschiedlichen Schallmodi können beispielsweise über den Anstellwinkel der Rotorblätter des Rotors und/oder über die Rotationsgeschwindigkeit des Rotors und/oder mittels der an den Rotor anliegenden Last eingestellt werden. Die Nennleistungen *P* sind teilweise oder vollständig verschieden voneinander. Die Schallleistungspegel *L*_{WA} sind teilweise oder vollständig verschieden voneinander.

Es ist denkbar, den Schallleistungspegel *L*_{WA} repräsentativ für alle Betriebsbedingungen anzugeben, wie es auch in obenstehender Tabelle durchgeführt ist. Alternativ ist es denkbar, dass für jeden Schallmodus der Schallleistungspegel *L*_{WA} tabelliert für unterschiedliche Betriebsbedingungen angegeben wird. Die Betriebsbedingungen können beispielsweise verschiedene Windgeschwindigkeiten und/oder verschiedene Luftdichten beinhalten. Hierbei ist auch denkbar, für die unterschiedlichen Betriebsbedingungen auch unterschiedliche Nennleistungen anzugeben.

Es ist denkbar, den Schallleistungspegel *L*_{WA} in verschiedene Frequenzbänder aufzuteilen. Die Frequenzbänder können beispielsweise unmittelbar aneinander angrenzend sein und insbesondere jeweils eine Oktave breit sein. Die Schallleistungspegel *L*_{WA} für die verschiedenen Frequenzbänder können repräsentativ für alle Betriebsbedingungen angegeben werden oder für jeden Schallmodus tabelliert für die unterschiedlichen Betriebsbedingungen angegeben werden.

Es ist bevorzugt, dass das Verfahren die Schritte aufweist: b) Bestimmen eines ersten Gesamtschalldruckpegels *L*ᵣ aus dem ersten Schallsignal; f) Bestimmen eines zweiten Gesamtschalldruckpegels *L*_{r,2} aus dem zweiten Schallsignal; wobei in Schritt g) als die charakteristische Größe des ersten Geräuschs ein an dem Immissionsort vorliegender Schalldruckpegel *L*_{r,WKA} des ersten Geräuschs unter Heranziehen des ersten Gesamtschalldruckpegels *L*ᵣ und des zweiten Gesamtschalldruckpegels *L*_{r,2} bestimmt wird.

Es ist bevorzugt, dass der an dem Immissionsort vorliegende Schalldruckpegel des ersten Geräuschs bestimmt wird unter Heranziehen eines an dem Emissionsort vorliegenden ersten Schallleistungspegels *L*_{WA, 1} des ersten Geräuschs und eines an dem Emissionsort vorliegenden zweiten Schallleistungspegel *L*_{WA, 2} des zweiten Geräuschs.

Der an dem Immissionsort vorliegende Schalldruckpegel *L*_{r,WKA} des ersten Geräuschs wird bevorzugt bestimmt gemäß ${L}_{r , WKA} = {L}_{r} + 10 {log}_{10} \left(\frac{1 - {10}^{Δ {L}_{r} / 10}}{1 - {10}^{Δ {L}_{WA} / 10}}\right) ,$
wobei Δ*L*ᵣ eine Pegeldifferenz des ersten
Gesamtschallschalldruckpegels *L*ᵣ subtrahiert von dem zweiten Gesamtschalldruckpegels L_{r,2} ist und Δ*L*_{WA} eine Pegeldifferenz des an dem Emissionsort vorliegenden ersten
Schallleistungspegels *L*_{WA, 1} des ersten Geräuschs subtrahiert von dem an dem Emissionsort vorliegenden zweiten
Schallleistungspegel *L*_{WA, 2} des zweiten Geräuschs ist. Die Pegeldifferenz Δ*L*ᵣ kann beispielsweise bestimmt werden gemäß: $Δ {L}_{r} = {L}_{r , 2} - {L}_{r}$
und die Pegeldifferenz Δ*L*_{WA} kann beispielsweise bestimmt werden gemäß: $Δ {L}_{WA} = {L}_{WA , 2} - {L}_{WA , 1} .$

Es ist bevorzugt, dass das Verfahren den Schritt aufweist: c) Abfragen, ob der Immissionsrichtwert IRW größer als der erste Gesamtschalldruckpegel *L*_{R} ist, wobei in dem Fall, dass die Antwort Nein ist, mit dem nächsten Schritt fortgefahren wird. Es ist bevorzugt, dass in dem Fall, dass in dem Schritt c) die Antwort Ja ist, der Zielschallmodus so gewählt wird, dass der Zielschallmodus eine größere Nennleistung und einen größeren Schallleistungspegel *L*_{WA} als der erste Schallmodus hat. Durch diese Abfrage ist es möglich, dass die Windkraftanlage mehr Strom erzeugt, ohne dass der Schritt e) durchgeführt wird, d.h. ohne den Rotor in dem zweiten Schallmodus zu rotieren.

Es ist bevorzugt, dass das Verfahren den Schritt aufweist: d) Prognostizieren eines an dem Immissionsort vorliegenden Schalldruckpegels *L*_{r,prog} aller künstlichen Quellen inklusive des ersten Geräuschs und exklusive Verkehrsgeräusche, Bilden eines 95% Perzentils *L*₉₅ des ersten Gesamtschalldruckpegels *L*ᵣ über einem Messzeitraum, in dem der Rotor in dem ersten Schallmodus rotiert, und Abfragen, ob das 95% Perzentil *L*₉₅ des ersten Gesamtschalldruckpegels größer als der um 3 Dezibel erhöhte Schalldruckpegel *L*_{r,prog} ist, wobei in dem Fall, dass die Antwort Nein ist, mit dem nächsten Schritt fortgefahren wird, und in dem Fall, dass die Antwort Ja ist, der Zielschallmodus so gewählt wird, dass der Zielschallmodus größer als der erste Schallmodus ist. Das Perzentil *L*₉₅ und der Schalldruckpegel *L*_{r,prog} können ermittelt werden, ohne dass es dazu erforderlich ist, den Schritt e) durchzuführen. Die künstlichen Quellen inklusive des ersten Geräuschs und exklusive der Verkehrsgeräusche können beispielsweise die nach der TA Lärm zu betrachtenden Schallquellen sein. Das 95% Perzentil L₉₅ ist der zu dem ersten Gesamtschalldruckpegel gehörende Schalldruckpegel, der in 95% der Messzeit erreicht oder überschritten wird. Dies bedeutet, dass es nur in 5% der Messzeit leiser als L₉₅ ist. Beispielsweise kann die Zeitspanne jeweils von einer vollen Stunde zu der darauf folgenden Stunde gebildet werden und L₉₅ kann so gewählt werden, dass es während drei Minuten dieser Stunde leiser als L₉₅ ist und ansonsten mindestens L₉₅ laut ist.

Für die Erstellung von Schallprognosen ist ein Regelwerk vorgesehen (beispielsweise in der TA Lärm und in anderen Länder-spezifischen Erlassen), welches das Vorgehen für die Schallprognosen regelt. Diese Regeln sind in käuflich erwerbbaren Computerprogrammen (wie beispielsweise mit dem Namen CadnaA, Immi und Soundplan) abgebildet. Beispielsweise können ein digitales Geländemodell, Position und Nabenhöhen der Windkraftanlagen, Position und Ausdehnung anderer Lärmquellen (ohne Verkehr) und/oder Summenpegel und Oktavbandspektrum der Windkraftanlagen, bei anderen Lärmquellen nur Summenpegel, als Eingangsdaten dienen.

Es ist bevorzugt, dass in Schritt h) abgefragt wird, ob der Immissionsrichtwert IRW innerhalb eines Toleranzbereichs um eine berechnete Überlagerung *L*_{r,sum} des an dem Immissionsort vorliegenden Schalldruckpegels *L*_{r,WKA} des ersten Geräuschs mit einem an dem Immissionsort vorliegenden prognostizierten Schalldruckpegel *L*_{r,IN,prog} aller künstlichen Quellen inklusive nicht geregelter Windkraftanlagen, exklusive Verkehrsgeräusche und exklusive der geregelten Windkraftanlagen, liegt, und in dem Fall, dass der Immissionsrichtwert IRW innerhalb des Toleranzbereichs liegt, der Zielschallmodus identisch zu dem ersten Schallmodus gewählt wird, in dem Fall, dass der Immissionsrichtwert IRW größer als der Toleranzbereich ist (d.h. der Immissionsrichtwert IRW liegt oberhalb des Toleranzbereichs), der Zielschallmodus so gewählt wird, dass der Zielschallmodus eine größere Nennleistung und einen größeren Schallleistungspegel *L*_{WA} als der erste Schallmodus hat, und in dem Fall, dass der Immissionsrichtwert IRW kleiner als der Toleranzbereich ist (d.h. der Immissionsrichtwert IRW liegt unterhalb des Toleranzbereichs), mit einer folgenden Abfrage fortgefahren wird oder der Zielschallmodus so gewählt wird, dass der Zielschallmodus eine kleinere Nennleistung und einen kleineren Schallleistungspegel *L*_{WA} als der erste Schallmodus hat. Mit dieser Abfrage kann ermittelt werden, ob gesetzliche Vorgaben eingehalten werden, obwohl der erste Gesamtschalldruckpegel *L*_{R} größer als der Immissionsrichtwert IRW ist. Es wird beispielsweise überprüft, ob zu laute Hintergrundgeräusche (beispielsweise aus Windgeräuschen, insbesondere an der Vegetation und/oder Häusern, oder Verkehrsgeräusche) die Ursache für die Überschreitung des Immissionsrichtwerts IRW sind und ob diese Hintergrundgeräusche lauter sind als das erste Geräusch ergänzt um die anderen künstlichen Quellen. In diesem Ausnahmefall, der beispielsweise bei hohen bodennahen Windgeschwindigkeiten oder bei einer Autobahn in der Nähe auftreten kann, darf die Windkraftanlage dann trotzdem unter Einhaltung der gesetzlichen Vorschriften noch betrieben werden. Die berechnete Überlagerung *L*_{r,sum} kann beispielsweise berechnet werden gemäß: ${L}_{r , sum} = 10 {log}_{10} \left({10}^{\frac{1}{10} {L}_{r , WKA}}+{10}^{\frac{1}{10} {L}_{r , IN , prog}}\right) .$

Es ist denkbar, dass für die vorgenannte Abfrage die berechnete Überlagerung *L*_{r,sum} auf 1 dB genau gerundet wird und der Immissionsrichtwert IRW in dB ohne Nachkommastellen angegeben wird. Es ist alternativ denkbar, den Immissionsrichtwert IRW in dB ohne Nachkommastellen anzugeben, die berechnete Überlagerung auf 1 dB genau zu runden und anschließend den Toleranzbereich zu bilden, indem eine Untergrenze des Toleranzbereichs als L_{r,sum}-A dB und eine Obergrenze des Toleranzbereichs als L_{r,sum}+A dB gebildet werden, wobei A eine ganze Zahl ist, insbesondere 1, 2 oder 3.

Es ist bevorzugt, dass der Schritt h) aufweist: Bestimmen eines an dem Immissionsort vorliegenden Schalldruckpegels *L*_{r,HG} eines Hintergrundgeräuschs, das in dem Nebengeräusch enthalten ist, unter Heranziehen des ersten Gesamtschalldruckpegels *L*ᵣ und des zweiten Gesamtschalldruckpegels *L*_{r,2}, Bestimmen eines 95% Perzentils *L*_{95,HG} des Schalldruckpegels *L*_{r,HG} des Hintergrundgeräuschs, wobei der Schritt h) die folgende Abfrage aufweist: Abfragen, ob das 95% Perzentil *L*_{95,HG} des Schalldruckpegels *L*_{r,HG} des Hintergrundgeräuschs größer ist als die berechnete Überlagerung *L*_{r,sum} des Schalldruckpegels *L*_{r,WKA} des ersten Geräuschs an dem Immissionsort mit dem für den Immissionsort prognostizierten Schalldruckpegel *L*_{r,IN,prog} aller künstlichen Quellen inklusive nicht geregelter Windkraftanlagen, exklusive Verkehrsgeräusche und exklusive der geregelten Windkraftanlagen, wobei in dem Fall, dass die Antwort Ja ist, der Zielschallmodus so gewählt wird, dass der Zielschallmodus eine größere Nennleistung und einen größeren Schallleistungspegel *L*_{WA} als der erste Schallmodus hat, und in dem Fall, dass die Antwort Nein ist, der Zielschallmodus so gewählt wird, dass der Zielschallmodus eine kleinere Nennleistung und einen kleineren Schallleistungspegel *L*_{WA} als der erste Schallmodus hat. Das 95% Perzentil L_{95,HG} ist der zu dem Hintergrundgeräusch gehörende Schalldruckpegel, der in 95% der Messzeit erreicht oder überschritten wird. Dies bedeutet, dass das Hintergrundgeräusch nur in 5% der Messzeit leiser als L_{95,HG} ist. Beispielsweise kann die Zeitspanne jeweils von einer vollen Stunde zu der darauf folgenden Stunde gebildet werden und L_{95,HG} kann so gewählt werden, dass das Hintergrundgeräusch während drei Minuten dieser Stunde leiser als L_{95,HG} ist und ansonsten mindestens L_{95,HG} laut ist. Es ist denkbar, dass sich der erste Gesamtschalldruckpegel rechnerisch zusammensetzt gemäß ${10}^{\frac{1}{10} {L}_{r}} = {10}^{\frac{1}{10} {L}_{r , WKA}} + {10}^{\frac{1}{10} {L}_{r , NG}} = {10}^{\frac{1}{10} {L}_{r , WKA}} + {10}^{\frac{1}{10} {L}_{r , HG}} + {10}^{\frac{1}{10} {L}_{r , IN , prog}} ,$ wobei *L*_{r,NG} der Schalldruckpegel der Nebengeräusche an dem Immissionsort ist.

Der Schalldruckpegel *L*_{r,HG} des Hintergrundgeräuschs an dem Immissionsort wird bevorzugt bestimmt gemäß: ${L}_{r , HG} = 10 {log}_{10} \left(\frac{{10}^{\frac{\left({L}_{r}+{ΔL}_{r}\right)}{10}} - {10}^{\frac{{L}_{r} + {ΔL}_{WA}}{10}}}{1 - {10}^{\frac{{ΔL}_{WA}}{10}}}-{10}^{{L}_{r , IN , prog} / 10}\right)$ wobei Δ*L*ᵣ die Pegeldifferenz des ersten
Gesamtschallschalldruckpegels *L*ᵣ subtrahiert von dem zweiten Gesamtschalldruckpegels *L*_{r,2} ist, Δ*L*_{WA} die Pegeldifferenz eines ersten Schallleistungspegels *L*_{WA, 1} des ersten Geräuschs an einem Emissionsort subtrahiert von einem zweiten Schallleistungspegel *L*_{WA, 2} des zweiten Geräuschs an dem Emissionsort ist und *L*_{r,IN,prog} der für den Immissionsort prognostizierte Schalldruckpegel aller künstlichen Quellen inklusive nicht geregelter Windkraftanlagen, exklusive Verkehrsgeräusche und exklusive der geregelten Windkraftanlage ist.

Alternativ dazu, den an dem Immissionsort vorliegenden Schalldruckpegel *L*_{r,HG} des Hintergrundgeräuschs unter Heranziehen des ersten Gesamtschalldruckpegels *L*ᵣ und des zweiten Gesamtschalldruckpegels *L*_{r,2} zu bestimmen, ist es denkbar, dass der Rotor in einem dritten Schallmodus rotiert wird. Dabei wird an dem Immissionsort ein drittes Schallsignal aufgenommen, das ein drittes von der Windkraftanlage in dem dritten Schallmodus verursachtes Geräusch und das Nebengeräusch enthält, wobei das dritte Geräusch verschieden von dem ersten Geräusch und dem zweiten Geräusch ist. Aus dem dritten Schallsignal wird ein dritter Gesamtschalldruckpegel bestimmt. Es kann eine größere Pegeldifferenz zwischen dem zweiten Gesamtschalldruckpegel und dem dritten Gesamtschalldruckpegel erzielt werden als zwischen dem zweiten Gesamtschalldruckpegel und dem ersten Gesamtschalldruckpegel. Durch die größere Pegeldifferenz kann der Schalldruckpegel *L*_{r,HG} mit einer größeren Genauigkeit bestimmt werden. Beispielsweise kann der zweite Schallmodus so gewählt werden, dass der zweite Schallmodus ein maximaler Schallmodus ist, in dem ein maximaler Schallleistungspegel *L*_{WA,max} vorliegt, der größer als die Schallleistungspegel *L*_{WA} all der anderen Schallmodi ist, und der dritte Schallmodus kann so gewählt werden, dass der dritte Schallmodus ein minimaler Schallmodus ist, in dem ein minimaler Schallleistungspegel *L*_{WA,min} vorliegt, der kleiner als die Schallleistungspegel *L*_{WA} all der anderen Schallmodi ist. Alternativ kann der dritte Schallmodus so gewählt werden, dass der dritte Schallmodus der maximale Schallmodus ist, und der zweite Schallmodus kann so gewählt werden, dass der zweite Schallmodus der minimale Schallmodus ist. Der dritte Schallmodus ist bevorzugt verschieden von dem ersten Schallmodus und dem zweiten Schallmodus.

Zum Bestimmen des prognostizierten Schalldruckpegels *L*_{r,IN,prog} ist es denkbar, einen Schalldruckpegel *L*_{Ersatz,IN} von Industrie- und Gewerbegeräuschen an einem Ersatzort zu messen. Der Ersatzort kann beispielsweise beabstandet von dem Emissionsort und dem Immissionsort angeordnet sein. Der Ersatzort kann beispielsweise näher an der Quelle der Industrie- und Gewerbegeräusche als der Immissionsort angeordnet sein. Mittels einer Modellierung kann der prognostizierte Schalldruckpegel *L*_{r,IN,prog} unter Heranziehen des Schalldruckpegels *L*_{Ersatz,IN} der Industrie- und Gewerbegeräusche bestimmt werden. Alternativ ist es jedoch auch denkbar, den prognostizierten Schalldruckpegels *L*_{r,IN,prog} ohne eine Messung zu bestimmen, d.h. vollständig zu modellieren.

Der Schritt a) wird bevorzugt sowohl vor dem Schritt e) als auch nach dem Schritt e) durchgeführt, wobei in Schritt b) ein erster Teilgesamtschalldruckpegel *L*_{r,v} des ersten Gesamtschalldruckpegels *L*ᵣ aus dem ersten Schallsignal gebildet wird, das vor dem Schritt e) liegt, und ein zweiter Teilgesamtschalldruckpegel *L*_{r,n} des ersten Gesamtschalldruckpegels *L*ᵣ aus dem ersten Schallsignal gebildet wird, das nach dem Schritt e) liegt. Dadurch können vorteilhaft Schwankungen in dem Nebengeräusch detektiert werden. Es ist bevorzugt, dass in dem Fall, dass ein Betrag einer Pegeldifferenz zwischen dem ersten Teilgesamtschalldruckpegel *L*_{r,v} und dem zweiten Teilgesamtschalldruckpegel *L*_{r,n} oberhalb eines Schwellenwerts liegt, der Schritt e) wiederholt wird, wobei in dem Fall, dass der Betrag der Pegeldifferenz zwischen dem ersten Teilgesamtschalldruckpegel *L*_{r,v} und dem zweiten Teilgesamtschalldruckpegel *L*_{r,n} unterhalb des Schwellenwerts liegt, mit dem Schritt f) fortgefahren wird.

Es ist bevorzugt, dass ein maximaler Schallmodus, in dem ein maximaler Schallleistungspegel *L*_{WA,max} vorliegt, der größer als die Schallleistungspegel *L*_{WA} all der anderen Schallmodi ist, und ein minimaler Schallmodus vorliegen, in dem ein minimaler Schallleistungspegel *L*_{WA,min} vorliegt, der kleiner als die Schallleistungspegel *L*_{WA} all der anderen Schallmodi ist, wobei der maximale Schallmodus für den zweiten Schallmodus gewählt wird, wenn eine erste Pegeldifferenz Δ*L*_{WA,A} des Schallleistungspegels *L*_{WA, 1} des ersten Geräuschs subtrahiert von dem maximalen Schallleistungspegel *L*_{WA,max} größer ist als eine zweite Pegeldifferenz Δ*L*_{WA,B} des minimalen Schallleistungspegels *L*_{WA,min} subtrahiert von dem Schallleistungspegel *L*_{WA, 1} des ersten Geräuschs, und ansonsten der minimale Schallmodus für den zweiten Schallmodus gewählt wird. Damit kann eine maximale Pegeldifferenz zwischen dem zweiten Geräusch und dem ersten Geräusch erzielt werden, wodurch das Verfahren besonders genau ist und der Zielschallmodus mit einer hohen Genauigkeit gewählt werden kann. Die erste Pegeldifferenz ΔL_{WA, A} kann beispielsweise bestimmt werden gemäß: $Δ {L}_{WA , A} = 10 {log}_{10} \left({10}^{\frac{1}{10} {L}_{WA , max}}-{10}^{\frac{1}{10} {L}_{WA}}\right)$ oder gemäß $Δ {L}_{WA , A} = {L}_{WA , max} - {L}_{WA}$ und die zweite Pegeldifferenz Δ*L*_{WA, B} kann beispielsweise bestimmt werden gemäß: $Δ {L}_{WA , B} = 10 {log}_{10} \left({10}^{\frac{1}{10} {L}_{WA}}-{10}^{\frac{1}{10} {L}_{WA , min}}\right) .$ oder gemäß $Δ {L}_{WA , B} = {L}_{WA} - {L}_{WA , min} .$

Es ist bevorzugt, dass das zweite Geräusch leiser als das erste Geräusch ist. Dadurch kann die Wahrscheinlichkeit eines versehentlichen Überschreitens des Immissionsrichtwertes IRW in dem Schritt e) verringert werden.

Die vorgenannten Berechnungen und Abfragen können beispielsweise für die entsprechenden Pegel über alle Frequenzen durchgeführt werden. Die vorgenannten Berechnungen und Abfragen können aber auch vollständig oder teilweise einzeln für die verschiedenen Frequenzbänder durchgeführt werden. Dies hat den Vorteil, dass dabei die frequenzabhängige Dämpfung der Luft berücksichtigt werden kann, denn niedrige Frequenzen werden viel schwächer von der Luft als hohe Frequenzen gedämpft. Das erste Geräusch der Windkraftanlage wird daher in erster Linie in den niedrigeren Frequenzbereichen an dem Immissionsort ankommen, wohingegen typische Windgeräusche eher in den mittleren Frequenzbereichen auftreten. Es ist dabei denkbar, einige der Frequenzbänder stärker als andere der Frequenzbänder zu gewichten.

Es ist denkbar, das erste Schallsignal und das zweite Schallsignal an zwei verschiedenen Immissionsorten aufzunehmen, wodurch zwei erste Schallsignale und zwei zweite Schallsignale vorliegen. In diesem Fall ist es denkbar, die Windkraftanlage für denjenigen Immissionsort zu regeln, an dem die Antworten auf die Abfragen eher nicht Ja sind.

Die erfindungsgemäße Vorrichtung zum Durchführen des Verfahrens weist eine Schallmesseinrichtung, die eingerichtet ist, das erste Schallsignal und das zweite Schallsignal aufzunehmen, und eine Regeleinrichtung auf, die eingerichtet ist, die Schritte g) und h) durchzuführen und der Windkraftanlage in den Schritten a), e) und i) den ersten Schallmodus, den zweiten Schallmodus und den Zielschallmodus zu kommunizieren. Zudem ist die Vorrichtung bevorzugt eingerichtet, die Schritte b) und f) und optional die Schritte c) und/oder d) durchzuführen.

Das erfindungsgemäße Computerprogramm umfasst Befehle, die bei der Ausführung des Programms durch einen Computer diesen veranlassen, das Verfahren auszuführen.

Das erfindungsgemäße computerlesbare Speichermedium umfasst Befehle, die bei der Ausführung durch einen Computer diesen veranlassen, das Verfahren auszuführen.

Im Folgenden wird anhand der beigefügten schematischen Zeichnungen die Erfindung näher erläutert. Es zeigen
Figur 1 eine Seitenansicht einer ersten Ausführungsform einer erfindungsgemäßen Vorrichtung,
Figur 2 eine Seitenansicht einer zweiten Ausführungsform einer zweiten erfindungsgemäßen Vorrichtung,
Figur 3 eine Auftragung eines Schallsignals und
Figur 4 einen Programmablaufplan.

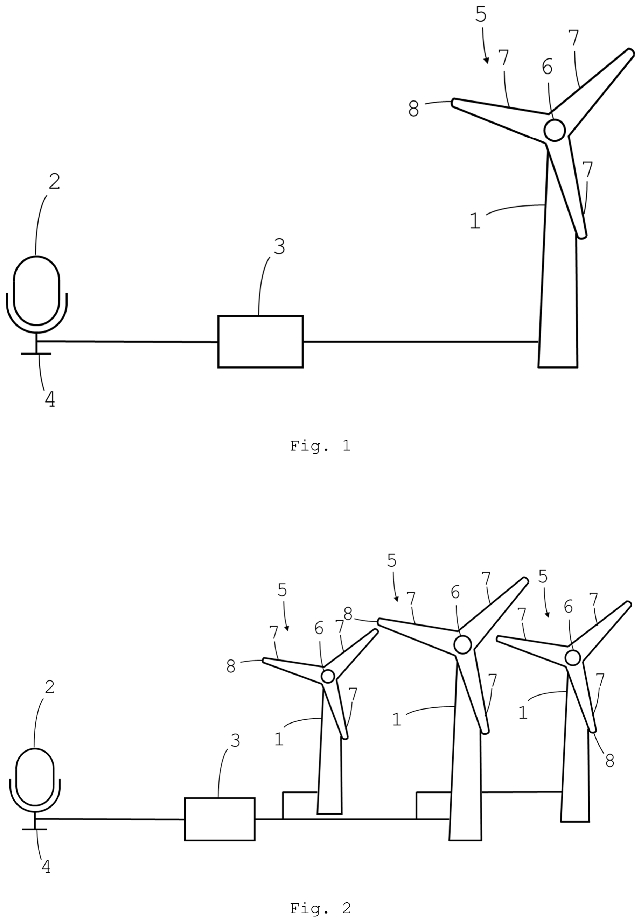

In Figuren 1 und 2 ist jeweils eine Situation dargestellt, in der eine Windkraftanlage 1 angeordnet ist, eine Schallmesseinrichtung 2 beabstandet von der Windkraftanlage 1 angeordnet ist und eine Regeleinrichtung 3 angeordnet ist. Die Windkraftanlage 1 kann einen Rotor 8 aufweisen, der eine Nabe 6 und mehrere Rotorblätter 7 aufweisen kann. Wenn der Rotor 8 rotiert, kann an einem Emissionsort 5, der in dem Bereich des Rotors 8 liegt, ein Geräusch entstehen. Dieses Geräusch breitet sich aus und kann von der Schallmesseinrichtung 2 an einem Immissionsort 4 aufgenommen werden. In der Situation gemäß Figur 1 wird nur eine Windkraftanlage 1 geregelt, wohingegen in der Situation gemäß Figur 2 mehrere Windkraftanlagen 2 geregelt werden.

Ein Verfahren zum Regeln der Windkraftanlage 1, die den Rotor 8 aufweist, kann die Schritte aufweisen: a) Rotieren des Rotors 8 in einem ersten Schallmodus und Aufnehmen eines ersten Schallsignals *p*₁, das ein erstes von der Windkraftanlage 1 in dem ersten Schallmodus verursachtes Geräusch und ein Nebengeräusch enthält, das nicht von der Windkraftanlage 1 stammt, an einem Immissionsort 4; e) Rotieren des Rotors 8 in einem zweiten Schallmodus, der verschieden von dem ersten Schallmodus ist, und Aufnehmen eines zweiten Schallsignals *p*₂, das ein zweites von der Windkraftanlage 1 in dem zweiten Schallmodus verursachtes Geräusch und das Nebengeräusch enthält, an dem Immissionsort 4, wobei das zweite Geräusch verschieden von dem ersten Geräusch ist; g) Bestimmen für den Immissionsort 4 einer charakteristischen Größe des ersten Geräuschs aus dem ersten Schallsignal *p*₁ und dem zweiten Schallsignal *p*₂; h) Wählen eines Zielschallmodus unter Heranziehen der charakteristischen Größe des ersten Geräuschs und eines Immissionsrichtwerts IRW; i) Rotieren des Rotors 8 in dem Zielschallmodus. Das erste Geräusch und das zweite Geräusch können beispielsweise vollständig oder teilweise von den Rotorblättern 7 verursacht sein. Bei dem Immissionsrichtwert IRW kann es sich um eine rechtliche Obergrenze eines Schalldruckpegel handeln, der an einem Immissionsort 4 von der Windkraftanlage 1 eingetragen werden darf. Beispielsweise in der TA Lärm ist ein solcher Immissionsrichtwert IRW angegeben. Indem der Rotor 8 in den Schritten a) und e) rotiert, befindet sich der Rotor 8 nicht im Stillstand.

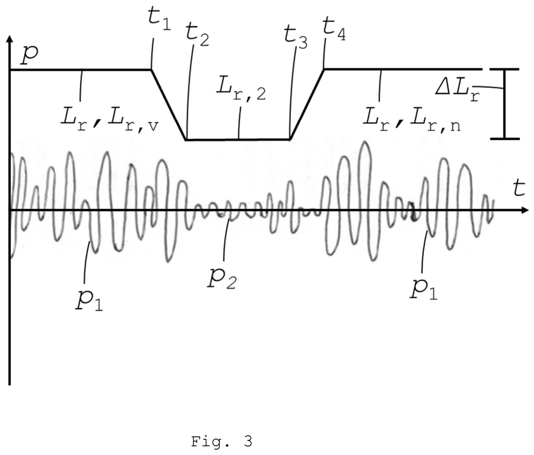

Figur 3 zeigt, dass die Schallmesseinrichtung 2 eingerichtet sein kann, einen Schalldruck p in Abhängigkeit der Zeit t aufzunehmen. Es ist denkbar, dass der Schritt a) bis zu einem Zeitpunkt t₁ erfolgt und der Rotor 8 an dem Zeitpunkt t₁ den ersten Schallmodus verlässt. An einem Zeitpunkt t₂, der zeitlich nach dem Zeitpunkt t₁ liegt, kommt der Rotor 8 in dem zweiten Schallmodus an und der Schritt e) fängt an. An einem Zeitpunkt t₃, der zeitlich nach dem Zeitpunkt t₂ liegt, endet der Schritt e). Es ist denkbar, dass zu dem Zeitpunkt t₃ der Rotor 8 den zweiten Schallmodus verlässt, und es ist insbesondere denkbar, dass der Rotor 8 zu einem vierten Zeitpunkt t₄, der zeitlich nach dem dritten Zeitpunkt t₃ liegt, wieder in dem ersten Schallmodus ankommt. Es ist denkbar, dass das erste Schallsignal p₁ bis maximal zu dem Zeitpunkt t₁ aufgenommen wird. Alternativ ist denkbar, dass der Schritt a) sowohl vor dem Schritt e) als auch nach dem Schritt e) liegt und das erste Schallsignal *p*₁ einen ersten Anteil, der spätestens an dem Zeitpunkt t₁ endet, und einen zweiten Anteil hat, der frühestens an dem Zeitpunkt t₄ beginnt. Das zweite Schallsignal *p*₂ kann frühestens an dem Zeitpunkt t₂ beginnen und spätestens an dem Zeitpunkt t₃ enden. Die Zeitpunkte t₁, t₂, t₃ und/oder t₄ können eine Verzögerung aufgrund der Schallausbreitung von dem Emissionsort 5 zu dem Immissionsort 4 berücksichtigen.

Figur 3 zeigt, dass das Verfahren die Schritte aufweisen kann: b) Bestimmen eines ersten Gesamtschalldruckpegels *L*ᵣ aus dem ersten Schallsignal *p*₁; f) Bestimmen eines zweiten Gesamtschalldruckpegels *L*_{r,2} aus dem zweiten Schallsignal *p*₂; wobei in Schritt g) als die charakteristische Größe des ersten Geräuschs ein an dem Immissionsort 4 vorliegender Schalldruckpegel *L*_{r,WKA} des ersten Geräuschs unter Heranziehen des ersten Gesamtschalldruckpegels *L*ᵣ und des zweiten Gesamtschalldruckpegels *L*_{r,2} bestimmt wird. Eine Pegeldifferenz Δ*L*ᵣ zwischen *L*_{r,2} und *L*ᵣ kann beispielsweise bestimmt werden gemäß: $Δ {L}_{r} = {L}_{r , 2} - {L}_{r} .$

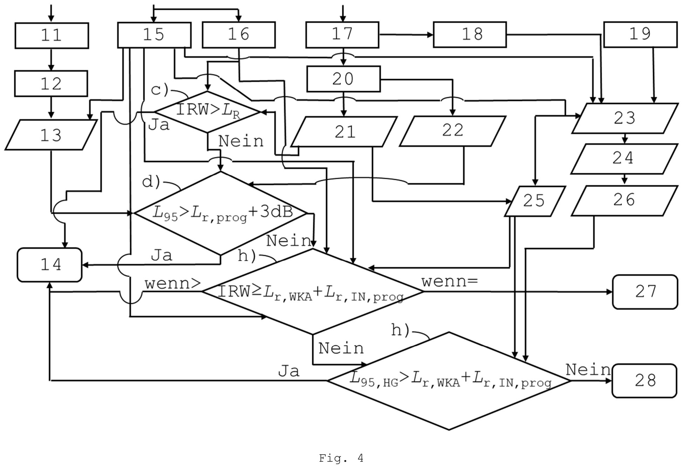

Figur 4 zeigt einen beispielhaften Programmablaufplan zum Durchführen des Verfahrens. In Schritt 17 können das erste Schallsignal *p*₁ und das zweite Schallsignal *p*₂ aufgenommen werden, d.h. es können die Schritte a) und e) durchgeführt werden. In Schritt 18 können der erste Gesamtschalldruckpegel *L*ᵣ und der zweite Gesamtschalldruckpegel *L*_{r,2} bestimmt werden, d.h. es können die Schritte b) und f) durchgeführt werden. In Schritt 19 können von einem Hersteller der Windkraftanlage 1 bereitgestellte Schallleistungspegel *L*_{WA} und Nennleistungen *P* für verschiedene Schallmodi eingelesen werden. Es ist denkbar, dass jeder Schallleistungspegel *L*_{WA} und jede Nennleistung *P* repräsentativ für alle Betriebsbedingungen eines bestimmten

Schallmodus angegeben werden (beispielsweise durch Bilden eines Mittelwerts über verschiedene Betriebsbedingungen), oder es ist denkbar, dass für jeden Schallmodus der Schallleistungspegel *L*_{WA} und die Nennleistung *P* tabelliert für unterschiedliche Betriebsbedingungen angegeben werden. Die Betriebsbedingungen können beispielsweise verschiedene Windgeschwindigkeiten und/oder verschiedene Luftdichten beinhalten. Es ist zudem denkbar, den Schallleistungspegel *L*_{WA} in jedem Schallmodus für verschiedene Frequenzbänder anzugeben.

In Schritt 23 können aus den eingelesenen Schallleistungspegeln *L*_{WA} für den Emissionsort 5 ein erster Schallleistungspegels *L*_{WA, 1} des ersten Geräuschs und ein zweiter Schallleistungspegel *L*_{WA, 2} des zweiten Geräuschs entnommen werden. Eine Pegeldifferenz Δ*L*_{WA} des ersten Schallleistungspegels *L*_{WA, 1} und des zweiten Schallleistungspegels *L*_{WA, 2} kann bestimmt werden gemäß${ΔL}_{WA} = {L}_{WA , 2} - {L}_{WA , 1} .$

In Schritt 25 kann der an dem Immissionsort 4 vorliegende Schalldruckpegel L_{r,WKA} des ersten Geräuschs beispielsweise bestimmt werden gemäß ${L}_{r , WKA} = {L}_{r} + 10 {log}_{10} \left(\frac{1 - {10}^{Δ {L}_{r} / 10}}{1 - {10}^{Δ {L}_{WA} / 10}}\right) .$

In Schritt 15 kann für den Immissionsort 4 ein Schalldruckpegel *L*_{r,IN,prog} aller künstlichen Quellen inklusive nicht geregelter Windkraftanlagen, exklusive Verkehrsgeräusche und exklusive der geregelten Windkraftanlagen prognostiziert werden. In dem Schritt h) kann gemäß ${L}_{r , sum} = 10 {log}_{10} \left({10}^{\frac{1}{10} {L}_{r , WKA}}+{10}^{\frac{1}{10} {L}_{r , IN , prog}}\right)$ eine berechnete Überlagerung *L*_{r,sum} von L_{r,WKA} und *L*_{r,IN,prog} bestimmt werden. Der Immissionsrichtwert IRW kann in Schritt 16 bereitgestellt werden, beispielsweise durch eine gesetzliche Vorgabe wie beispielsweise die TA Lärm. In Schritt h) kann abgefragt werden, ob der Immissionsrichtwert IRW innerhalb eines Toleranzbereichs um die berechnete Überlagerung liegt (in Figur 4 ist dies die obere mit h) gekennzeichnete Abfrage). In dem Fall, dass der Immissionsrichtwert IRW innerhalb des Toleranzbereichs liegt, kann der Zielschallmodus identisch zu dem ersten Schallmodus gewählt werden, vgl. Schritt 27. In dem Fall, dass der Immissionsrichtwert IRW größer als der Toleranzbereich ist (d.h. IRW liegt oberhalb des Toleranzbereichs), kann der Zielschallmodus so gewählt werden, dass der Zielschallmodus eine größere Nennleistung *P* und einen größeren Schallleistungspegel *L*_{WA} als der erste Schallmodus hat, vgl. Schritt 14. In dem Fall, dass der Immissionsrichtwert IRW kleiner als der Toleranzbereich ist (d.h. IRW liegt unterhalb des Toleranzbereichs), kann mit einer folgenden Abfrage fortgefahren werden (in Figur 4 ist dies die untere mit h) gekennzeichnete Abfrage) oder der Zielschallmodus so gewählt werden, dass der Zielschallmodus eine kleinere Nennleistung P und einen kleineren Schallleistungspegel *L*_{WA} als der erste Schallmodus hat (nicht in Figur 4 dargestellt). Es ist denkbar, den Toleranzbereich zu bilden, indem die berechnete Überlagerung *L*_{r,sum} auf 1 dB genau gerundet wird und der Immissionsrichtwert IRW in dB ohne Nachkommastellen angegeben wird.

In Schritt 24 kann ein an dem Immissionsort 4 vorliegender Schalldruckpegel *L*_{r,HG} eines Hintergrundgeräuschs, das in dem Nebengeräusch enthalten ist, unter Heranziehen des ersten Gesamtschalldruckpegels *L*ᵣ und des zweiten Gesamtschalldruckpegels *L*_{r,2} bestimmt werden. Das Nebengeräusch und das Hintergrundgeräusch können beispielsweise über folgende Gleichung miteinander in Beziehung stehen: ${10}^{\frac{1}{10} {L}_{r , NG}} = {10}^{\frac{1}{10} {L}_{r , HG}} + {10}^{\frac{1}{10} {L}_{r , IN , prog}} ,$ wobei *L*_{r,NG} der an dem Immissionsort 4 vorliegende Schalldruckpegel des Nebengeräuschs ist. Der Schalldruckpegel des Hintergrundgeräuschs *L*_{r,HG} kann beispielsweise bestimmt werden gemäß: ${L}_{r , HG} = 10 {log}_{10} \left(\frac{{10}^{\left({L}_{r}+{ΔL}_{r}\right) / 10} - {10}^{\left({L}_{r}+{ΔL}_{WA}\right) / 10}}{1 - {10}^{{ΔL}_{WA} / 10}}-{10}^{{L}_{r , IN , prog} / 10}\right) .$

In Schritt 26 kann ein 95% Perzentil des an dem Immissionsort 4 vorliegenden Schalldruckpegels *L*_{r,HG} des Hintergrundgeräuschs bestimmt werden. Die folgende Abfrage kann beinhalten: Abfragen, ob das 95% Perzentil *L*_{95,HG} des Schalldruckpegels *L*_{r,HG} des Hintergrundgeräuschs größer als die berechnete Überlagerung ist, wobei in dem Fall, dass die Antwort Ja ist, der Zielschallmodus so gewählt wird, dass der Zielschallmodus eine größere Nennleistung *P* und einen größeren Schallleistungspegel *L*_{WA} als der erste Schallmodus hat (vgl. Schritt 14), und in dem Fall, dass die Antwort Nein ist, der Zielschallmodus so gewählt wird, dass der Zielschallmodus eine kleinere Nennleistung P und einen kleineren Schallleistungspegel *L*_{WA} als der erste Schallmodus hat, vgl. Schritt 28.

Wie es aus Figur 4 ersichtlich ist, kann in einem Schritt 20 eine Messdatenanalyse erfolgen. Als Ergebnis können in Schritt 21 der erste Gesamtschalldruckpegel *L*_{R} und in Schritt 22 ein 95% Perzentil *L*₉₅ des ersten Gesamtschalldruckpegels *L*_{R} über einen Messzeitraum angegeben werden.

Das Verfahren kann den Schritt aufweisen: c) Abfragen, ob der Immissionsrichtwert IRW größer als der erste Gesamtschalldruckpegel *L*_{R} ist, wobei in dem Fall, dass die Antwort Nein ist, mit dem nächsten Schritt fortgefahren wird, und in dem Fall, dass in dem Schritt c) die Antwort Ja ist, der Zielschallmodus so gewählt wird, dass der Zielschallmodus eine größere Nennleistung *P* und einen größeren Schallleistungspegel *L*_{WA} als der erste Schallmodus hat, vgl. Schritt 14.

In einem Schritt 11 kann ein Prognosemodell für den an dem Immissionsort 4 vorliegenden Schalldruckpegel angegeben werden. Als Eingangsdaten für das Modell können beispielsweise der Schallmodus und/oder aktuelle Wetterdaten, insbesondere die Windgeschwindigkeit und/oder die Luftdichte, dienen. Als Ausgabe ergibt das Prognosemodell einen oder mehrere Schalldruckpegel. In einem Schritt 12 gibt das Prognosemodell einen an dem Immissionsort 4 vorliegenden prognostizierten Schalldruckpegel *L*_{r,WKA,prog} des von der Windkraftanlage 1 verursachten ersten Geräuschs aus. Es ist denkbar, dass für das Prognostizieren des Schalldruckpegel *L*_{r,WKA,prog} der Schallleistungspegel *L*_{WA,1} für das erste Geräusch verwendet wird, der von den Betriebsbedingungen abhängt, insbesondere von der Windgeschwindigkeit und/oder der Luftdichte.

Das Verfahren kann den Schritt aufweisen: d) Prognostizieren eines an dem Immissionsort 4 vorliegenden Schalldruckpegels *L*_{r,prog} aller künstlichen Quellen inklusive des ersten Geräuschs und exklusive Verkehrsgeräusche, vgl. Schritt 13. Beispielsweise kann der Schalldruckpegels *L*_{r,prog} bestimmt werden gemäß: ${L}_{r , prog} = 10 {log}_{10} \left({10}^{\frac{1}{10} {L}_{r , WKA , prog}}+{10}^{\frac{1}{10} {L}_{r , IN , prog}}\right) .$

Der Schritt d) kann zudem das Bilden des 95% Perzentils *L*₉₅ aufweisen, vgl. Schritt 22. Zudem kann Schritt d) aufweisen: Abfragen, ob das 95% Perzentil *L*₉₅ des ersten Gesamtschalldruckpegels größer als der um 3 Dezibel erhöhte Schalldruckpegel *L*_{r,prog} ist (d.h. es wird abgefragt, ob *L*₉₅ > *L*_{r,prog} + 3dB), wobei in dem Fall, dass die Antwort Nein ist, mit dem nächsten Schritt fortgefahren wird, und in dem Fall, dass die Antwort Ja ist, der Zielschallmodus so gewählt wird, dass der Zielschallmodus eine größere Nennleistung *P* und eine größere Schallleistung als der erste Schallmodus hat, vergleiche Schritt 14.

In Schritt 14 ist es denkbar, den Zielschallmodus so zu wählen, dass der nächsthöhere Schallleistungspegel *L*_{WA} gewählt wird oder einen oder mehrere Schallleistungspegel *L*_{WA} zu überspringen. Analog ist es in Schritt 28 denkbar, den Zielschallmodus so zu wählen, dass der nächstkleinere Schallleistungspegel *L*_{WA} gewählt wird oder einen oder mehrere Schallleistungspegel *L*_{WA} zu überspringen.

In Figur 2 ist der Fall dargestellt, dass mehrere der Windkraftanlagen 1 geregelt werden. Bei der Bestimmung von *L*_{r,HG} kann wie folgt vorgegangen werden: Hierzu ist zunächst auszuführen, dass die Dämpfung des Schalls auf dem Ausbreitungsweg von dem Emissionsort 5 zu dem Immissionsort für jede der Windkraftanlagen 1 anders ist. Die Dämpfung kann jedoch in ihre drei Haupt-Bestandteile zerlegt werden:
1. Geometrische Dämpfung,
2. Geometrische / Windrichtungsabhängige Dämpfung durch das richtungsabhängige Schallabstrahl-Verhalten der Windkraftanlagen 1 und
3. die rein Wetter-abhängige Dämpfung.

Der erste Bestandteil ist konstant und rein durch die Entfernung der Windkraftanlage 1 zum Immissionsort 4 vorgegeben, der zweite Bestandteil ist variabel je nach Windrichtung und der dritte Bestandteil ist variabel je nach Temperatur, Feuchte der Luft, Bodenbeschaffenheit und atmosphärischer Schichtung.

Im Folgenden wird die Notation eingeführt: ${L}_{WA i}^{m}$ ist der Schallleistungspegel, wobei *i* die verschiedenen Windkraftanlagen 1 durchnummeriert und *m* sich auf den Schallmodus bezieht. Im folgenden Beispiel werden zwei Anlagen zunächst mit dem gleichen Betriebsmodus 4 betrachtet: ${L}_{r} = 10 {log}_{10} \left({10}^{\left({L}_{WA 1}^{4}-{α}_{1}\right) / 10}+{10}^{\left({L}_{WA 2}^{4}-{α}_{2}\right) / 10}+{10}^{{L}_{r , HG} / 10}\right) ,$ wobei αᵢ die Dämpfung der i-ten Windkraftanlage 1 ist. Dies lässt sich auch als Skalarprodukt schreiben, um es in die allgemeine Form für lineare Gleichungssystem Ax=b zu bringen: $\left[{10}^{{L}_{WA 1}^{4} / 10} {10}^{{L}_{WA 2}^{4} / 10} 1\right] ⋅ \left(\begin{matrix}{10}^{- \frac{{α}_{1}}{10}} \\ {10}^{- \frac{{α}_{2}}{10}} \\ {10}^{\frac{{L}_{r , HG}}{10}}\end{matrix}\right) = {10}^{\frac{{L}_{r}}{10}} .$

Wenn mehrere Messungen bei verschiedenen Betriebsmodi durchgeführt werden, ergibt sich folgendes Gleichungssystem: $\left[\begin{matrix}{10}^{{L}_{WA 1}^{4} / 10} & {10}^{{L}_{WA 2}^{4} / 10} & 1 \\ {10}^{{L}_{WA 1}^{3} / 10} & {10}^{{L}_{WA 2}^{4} / 10} & 1 \\ {10}^{{L}_{WA 1}^{3} / 10} & {10}^{{L}_{WA 2}^{3} / 10} & 1\end{matrix}\right] ⋅ \left(\begin{matrix}{10}^{- \frac{{α}_{1}}{10}} \\ {10}^{- \frac{{α}_{2}}{10}} \\ {10}^{\frac{{L}_{r , HG}}{10}}\end{matrix}\right) = \left(\begin{matrix}{10}^{{L}_{r}^{4.4}} \\ {10}^{{L}_{r}^{3 , 4}} \\ {10}^{{L}_{r}^{3 , 3}}\end{matrix}\right) ,$ wobei ${L}_{r}^{a , b}$ der an dem Immissionsort 4 vorliegende Schalldruckpegel ist, wenn die erste Windkraftanlage 1 im a-ten Schallmodus und die zweite Windkraftanlage 1 im b-ten Schallmodus vorliegen. ${L}_{r}^{3 , 4}$ ist beispielsweise der an dem Immissionsort 4 vorliegende Gesamtschalldruckpegel, wenn die erste Windkraftanlage 1 im dritten Schallmodus und die zweite Windkraftanlage 1 im vierten Schallmodus vorliegen. Dieses lineare Gleichungssystem lässt sich durch ein LeastSquare Verfahren lösen und somit α₁, α₂ und *L*_{r,HG} erhalten. Dafür sind mindestens *N*_{WEA}+1 Messungen notwendig, wobei *N*_{WEA} die Anzahl der Windkraftanlagen 1 ist.

Es werden somit das *L*_{r,HG} direkt bestimmt und die α*ᵢ*, welche die Dämpfung auf dem Ausbreitungsweg zwischen dem Emissionsort 5 und dem Immissionsort 4 beschreiben. Aus den α*ᵢ* lassen sich daraufhin die Teilpegel der einzelnen Windkraftanlagen 1, die L^{m}_{r,WKA*i*} bestimmen (Teilpegel der Windkraftanlage *i* im Schallmode *m* am Immissionsort 4), deren Überlagerung wiederum das gesamte Geräusch der betrachteten Windenergieanlagen an dem Immissionsort 4 ergibt. Mittels der Gleichung ${{L}^{m}}_{r , WKAi} = {{L}^{m}}_{WAI} - {α}_{i}$ kann L^{m}_{r,WKAi} bestimmt werden. In dem Fall, dass die sich hieraus ergebende Anzahl der Messungen bei mehreren der Windkraftanlagen 1 und mehreren möglichen Schallmodi sehr groß wird, ist es denkbar, das Gleichungssystem zu vereinfachen. Dies geschieht durch Formulierung von Nebenbedingungen, mit deren Hilfe einzelne Elemente der Matrix gleichgesetzt oder mittels separater Formeln in Beziehung untereinander gesetzt werden. Ein Ansatz dafür ist die eingangs ausgeführte Zerlegung der Dämpfungsterme in ihre Wetter-abhängigen und - unabhängigen Bestandteile, die dann entweder für jede der Windkraftanlagen 1 einzeln ermittelt werden (aber wetterunabhängig sind) oder für die momentane Wetter-Situation ermittelt werden, dann aber für alle Windenergie-Anlagen gleich sind. Eine alternative oder ergänzende Methode bestünde darin, die Windkraftanlagen 1 des Parks in unterschiedliche Klassen (Bins) zusammenzufassen, innerhalb derer alle Windkraftanlagen 1 (oder einzene ihrer Charakteristika) als gleich behandelt werden.

Die Vereinfachung der Matrix durch Nebenbedingungen zeigt anschaulich das folgende Beispiel für drei Windkraftanlagen 1, wobei zusätzlich die Dämpfung zweier Windkraftanlagen 1 ins Verhältnis gesetzt wird. Damit ergeben sich drei unbekannte Dämpfungen α*₁*, α*₂* und α*₃* zwischen den Emissionsorten 5 und dem Immissionsort 4: $\left[{10}^{{L}_{WA 1} / 10} {10}^{{L}_{WA 2} / 10} {10}^{{L}_{WA 3} / 10} 1\right] ⋅ \left(\begin{matrix}{10}^{- {α}_{1} / 10} \\ {10}^{- {α}_{2} / 10} \\ {10}^{- {α}_{3} / 10} \\ {10}^{{L}_{r , HG} / 10}\end{matrix}\right) = {10}^{{L}_{r} / 10} ,$

Das Gleichungssystem bedarf im Normalfall *N*_{WEA}+1 Messungen mit unterschiedlichen Betriebsmodi. Wenn angenommen wird, dass sich die Schallausbreitung zwischen der ersten Windkraftanlage 1 und der zweiten Windkraftanlage 1 gleich verhält, kann eine Nebenbedingung *Δα*_{2,3} = *α*₃ - *α*₂ eingeführt werden, so dass nur noch drei Messungen mit unterschiedlichen Betriebsmodi durchgeführt werden müssen. Damit ergibt sich beispielsweise folgendes Gleichungssystem: $\left[\begin{matrix}{10}^{{L}_{WA 1}^{4} / 10} & {10}^{{L}_{WA 2}^{4} / 10} & {10}^{{L}_{WA 3}^{4} / 10} & 1 \\ {10}^{{L}_{WA 1}^{3} / 10} & {10}^{{L}_{WA 2}^{4} / 10} & {10}^{{L}_{WA 3}^{4} / 10} & 1 \\ {10}^{{L}_{WA 1}^{3} / 10} & {10}^{{L}_{WA 2}^{3} / 10} & {10}^{{L}_{WA 3}^{3} / 10} & 1 \\ 0 & 1 & - {10}^{Δ {α}_{2 , 3} / 10} & 0\end{matrix}\right] ⋅ \left(\begin{matrix}{10}^{- \frac{{α}_{1}}{10}} \\ {10}^{- \frac{{α}_{2}}{10}} \\ {10}^{- \frac{{α}_{3}}{10}} \\ {10}^{\frac{{L}_{r , HG}}{10}}\end{matrix}\right) = \left(\begin{matrix}{10}^{\frac{{L}_{r}^{4 , 4,4}}{10}} \\ {10}^{\frac{{L}_{r}^{3 , 4,4}}{10}} \\ {10}^{\frac{{L}_{r}^{3 , 3,3}}{10}} \\ 0\end{matrix}\right) .$ wobei ${L}_{r}^{a , b , c}$ der an dem Immissionsort 4 vorliegende Schalldruckpegel ist, wenn die erste Windkraftanlage 1 im a-ten Schallmodus, die zweite Windkraftanlage 1 im b-ten Schallmodus und die dritte Windkraftanlage 1 im c-ten Schallmodus vorliegen. Der Index "r" in den genannten Pegeln zeigt an, dass der entsprechende Pegel an dem Immissionsort 4 vorliegt.

### Bezugszeichenliste

1 Windkraftanlage
2 Schallmesseinrichtung
3 Regeleinrichtung
4 Immissionsort
5 Emissionsort
6 Nabe
7 Rotorblatt
8 Rotor
*p* Schalldruck
*t* Zeit
*p*₁ erstes Schallsignal
*p*₂ zweites Schallsignal
IRW Immissionsrichtwert
*L*ᵣ erster an dem Immissionsort vorliegender Gesamtschalldruckpegel
*L*_{r,2} zweiter an dem Immissionsort vorliegender Gesamtschalldruckpegel
L_{r,v} erster Teilgesamtschalldruckpegel (zeitlich erster Teil des ersten Gesamtschalldruckpegels)
L_{r,n} zweiter Teilgesamtschalldruckpegel (zeitlich zweiter Teil des ersten Gesamtschalldruckpegels)
*L*₉₅ 95% Perzentil des ersten Gesamtschalldruckpegels *L*ᵣ
*L*_{WA} Schallleistungspegel der Windkraftanlage
*L*_{WA,1} Schallleistungspegel des ersten Geräuschs
*L*_{WA,2} Schallleistungspegel des zweiten Geräuschs
*L*_{r,prog} an dem Immissionsort vorliegender prognostizierter Schalldruckpegel aller künstlichen Quellen inklusive des von der Windkraftanlage verursachten ersten Geräuschs und exklusive Verkehrsgeräusche
L_{r,IN,prog} an dem Immissionsort vorliegender prognostizierter Schalldruckpegel aller künstlichen Quellen inklusive nicht geregelter Windkraftanlagen, exklusive Verkehrsgeräusche und exklusive den geregelten Windkraftanlagen
*L*_{r,WKA,prog} an dem Immissionsort vorliegender prognostizierter Schalldruckpegel des von der Windkraftanlage verursachten ersten Geräuschs
*L*_{r,WKA} an dem Immissionsort vorliegender Schalldruckpegel des von der Windkraftanlage verursachten ersten Geräuschs *L*_{r,sum} Überlagerung
*L*_{*r,*HG} an dem Immissionsort (4) vorliegender Schalldruckpegel des Hintergrundgeräuschs
*L*_{95,HG} 95% Perzentil des Schalldruckpegels *L*_{r,HG}

## Patentansprüche

1. Verfahren zum Regeln einer Windkraftanlage (1), die einen Rotor (8) aufweist, mit den Schritten:
a) Rotieren des Rotors (8) in einem ersten Schallmodus und Aufnehmen eines ersten Schallsignals (*p*₁), das ein erstes von der Windkraftanlage (1) in dem ersten Schallmodus verursachtes Geräusch und ein Nebengeräusch enthält, das nicht von der Windkraftanlage (1) stammt, an einem Immissionsort (4);
e) Rotieren des Rotors (8) in einem zweiten Schallmodus und Aufnehmen eines zweiten Schallsignals (*p*₂), das ein zweites von der Windkraftanlage (1) in dem zweiten Schallmodus verursachtes Geräusch und das Nebengeräusch enthält, an dem Immissionsort (4), wobei das zweite Geräusch verschieden von dem ersten Geräusch ist;
g) Bestimmen für den Immissionsort (4) einer charakteristischen Größe des ersten Geräuschs aus dem ersten Schallsignal (*p*₁) und dem zweiten Schallsignal (*p*₂);
h) Wählen eines Zielschallmodus unter Heranziehen der charakteristischen Größe des ersten Geräuschs und eines Immissionsrichtwerts (IRW);
i) Rotieren des Rotors (8) in dem Zielschallmodus.

2. Verfahren gemäß Anspruch 1, mit den Schritten:
b) Bestimmen eines ersten Gesamtschalldruckpegels (*L*ᵣ) aus dem ersten Schallsignal (*p*₁);
f) Bestimmen eines zweiten Gesamtschalldruckpegels (*L*_{r,2}) aus dem zweiten Schallsignal (*p*₂);
wobei in Schritt g) als die charakteristische Größe des ersten Geräuschs ein an dem Immissionsort (4) vorliegender Schalldruckpegel (*L*_{r,WKA}) des ersten Geräuschs unter Heranziehen des ersten Gesamtschalldruckpegels (*L*ᵣ) und des zweiten Gesamtschalldruckpegels (*L*_{r,2}) bestimmt wird.

3. Verfahren gemäß Anspruch 2, wobei der an dem Immissionsort (4) vorliegende Schalldruckpegel L_{r,WKA} des ersten Geräuschs bestimmt wird gemäß ${L}_{r , WKA} = {L}_{r} + 10 {log}_{10} \left(\frac{1 - {10}^{Δ {L}_{r} / 10}}{1 - {10}^{Δ {L}_{WA} / 10}}\right) ,$ wobei *L*ᵣ der erste Gesamtschalldruckpegel ist, Δ*L*ᵣ eine Pegeldifferenz des ersten Gesamtschallschalldruckpegels (*L*ᵣ) subtrahiert von dem zweiten Gesamtschalldruckpegels (L_{r,2}) ist und Δ*L*_{WA} eine Pegeldifferenz eines an einem Emissionsort (5) vorliegenden ersten Schallleistungspegels (*L*_{WA,1}) des ersten Geräuschs subtrahiert von einem zweiten an dem Emissionsort (5) vorliegenden Schallleistungspegel (*L*_{WA,2}) des zweiten Geräuschs ist.

4. Verfahren gemäß Anspruch 2 oder 3, mit dem Schritt:
c) Abfragen, ob der Immissionsrichtwert (IRW) größer als der erste Gesamtschalldruckpegel (*L*_{R}) ist, wobei in dem Fall, dass die Antwort Nein ist, mit dem nächsten Schritt fortgefahren wird.

5. Verfahren gemäß Anspruch 4, wobei in dem Fall, dass in dem Schritt c) die Antwort Ja ist, der Zielschallmodus so gewählt wird, dass der Zielschallmodus eine größere Nennleistung (P) und einen größeren Schallleistungspegel (*L*_{WA}) als der erste Schallmodus hat.

6. Verfahren gemäß einem der Ansprüche 2 bis 5, mit dem Schritt:
d) Prognostizieren eines an dem Immissionsort (4) vorliegenden Schalldruckpegels *L*_{r,prog} aller künstlichen Quellen inklusive des ersten Geräuschs und exklusive Verkehrsgeräusche, Bilden eines 95% Perzentils (*L*₉₅) des ersten Gesamtschalldruckpegels (*L*ᵣ) über einem Messzeitraum, in dem der Rotor (8) in dem ersten Schallmodus rotiert, und Abfragen, ob das 95% Perzentil (*L*₉₅) des ersten Gesamtschalldruckpegels größer als der um 3 Dezibel erhöhte Schalldruckpegel *L*_{r,prog} ist, wobei in dem Fall, dass die Antwort Nein ist, mit dem nächsten Schritt fortgefahren wird, und in dem Fall, dass die Antwort Ja ist, der Zielschallmodus so gewählt wird, dass der Zielschallmodus eine größere Nennleistung (*P*) und einen größeren Schallleistungspegel (*L*_{WA}) als der erste Schallmodus hat.

7. Verfahren gemäß einem der Ansprüche 2 bis 6, wobei in Schritt h) abgefragt wird, ob der Immissionsrichtwert (IRW) innerhalb eines Toleranzbereichs um eine berechnete Überlagerung des an dem Immissionsort (4) vorliegenden Schalldruckpegels (*L*_{r,WKA}) des ersten Geräuschs mit einem für den Immissionsort (4) prognostizierten Schalldruckpegel (*L*_{r,IN,prog}) aller künstlichen Quellen inklusive nicht geregelter Windkraftanlagen, exklusive Verkehrsgeräusche und exklusive der geregelten Windkraftanlagen, liegt, und in dem Fall, dass der Immissionsrichtwert (IRW) innerhalb des Toleranzbereichs liegt, der Zielschallmodus identisch zu dem ersten Schallmodus gewählt wird, in dem Fall, dass der Immissionsrichtwert (IRW) größer als der Toleranzbereich ist, der Zielschallmodus so gewählt wird, dass der Zielschallmodus eine größere Nennleistung (*P*) und einen größeren Schallleistungspegel (*L*_{WA}) als der erste Schallmodus hat, und in dem Fall, dass der Immissionsrichtwert (IRW) kleiner als der Toleranzbereich ist, mit einer folgenden Abfrage fortgefahren wird oder der Zielschallmodus so gewählt wird, dass der Zielschallmodus eine kleinere Nennleistung (*P*) und einen kleineren Schallleistungspegel (*L*_{WA}) als der erste Schallmodus hat.

8. Verfahren gemäß Anspruch 7, wobei Schritt h) beinhaltet:
Bestimmen eines an dem Immissionsort (4) vorliegenden Schalldruckpegels (*L*_{r,HG}) eines Hintergrundgeräuschs, das in dem Nebengeräusch enthalten ist, unter Heranziehen des ersten Gesamtschalldruckpegels (*L*ᵣ) und des zweiten
Gesamtschalldruckpegels (*L*_{r,2}), Bestimmen eines 95% Perzentils des Schalldruckpegels (*L*_{r,HG}) des Hintergrundgeräuschs, wobei die folgende Abfrage beinhaltet ist: Abfragen, ob das 95% Perzentil (*L*_{95,HG}) des Schalldruckpegels (*L*_{r,HG}) des Hintergrundgeräuschs größer als die berechnete Überlagerung ist, wobei in dem Fall, dass die Antwort Ja ist, der Zielschallmodus so gewählt wird, dass der Zielschallmodus eine größere Nennleistung (P) und einen größeren
Schallleistungspegel (*L*_{WA}) als der erste Schallmodus hat, und in dem Fall, dass die Antwort Nein ist, der Zielschallmodus so gewählt wird, dass der Zielschallmodus eine kleinere Nennleistung (P) und einen kleineren Schallleistungspegel (*L*_{WA}) als der erste Schallmodus hat.

9. Verfahren gemäß Anspruch 8, wobei der Schalldruckpegel *L*_{r,HG} des Hintergrundgeräuschs an dem Immissionsort (4) bestimmt wird gemäß ${L}_{r , HG} = 10 {log}_{10} \left(\frac{{10}^{\left({L}_{r}+{ΔL}_{r}\right) / 10} - {10}^{\left({L}_{r}+{ΔL}_{WA}\right) / 10}}{1 - {10}^{{ΔL}_{WA} / 10}}-{10}^{{L}_{r , IN , prog} / 10}\right)$ wobei *L*ᵣ der erste Gesamtschalldruckpegel ist, Δ*L*ᵣ eine Pegeldifferenz des ersten Gesamtschallschalldruckpegels (*L*ᵣ) subtrahiert von dem zweiten Gesamtschalldruckpegels (L_{r,2}) ist, Δ*L*_{WA} eine Pegeldifferenz eines ersten Schallleistungspegels (*L*_{WA,1}) des ersten Geräuschs an einem Emissionsort (5) subtrahiert von einem zweiten Schallleistungspegel (*L*_{WA,2}) des zweiten Geräuschs an dem Emissionsort (5) ist und *L*_{r,IN,prog} der für den Immissionsort (4) prognostizierte Schalldruckpegel aller künstlichen Quellen inklusive nicht geregelter Windkraftanlagen, exklusive Verkehrsgeräusche und exklusive den geregelten Windkraftanlagen (1) ist.

10. Verfahren gemäß einem der Ansprüche 2 bis 9, wobei der Schritt a) sowohl vor dem Schritt e) als auch nach dem Schritt e) durchgeführt wird, wobei in Schritt b) ein erster Teilgesamtschalldruckpegel (*L*_{r*,*v}) des ersten Gesamtschalldruckpegels (*L*ᵣ) aus dem ersten Schallsignal (*p*₁) gebildet wird, das vor dem Schritt e) liegt, und ein zweiter Teilgesamtschalldruckpegel (*L*_{r,n}) des ersten Gesamtschalldruckpegels (*L*ᵣ) aus dem ersten Schallsignal (*p*₁) gebildet wird, das nach dem Schritt e) liegt.

11. Verfahren gemäß Anspruch 10, wobei in dem Fall, dass ein Betrag einer Pegeldifferenz zwischen dem ersten Teilgesamtschalldruckpegel (*L*_{r*,*v}) und dem zweiten Teilgesamtschalldruckpegel (*L*_{r,n}) oberhalb eines Schwellenwerts liegt, der Schritt e) wiederholt wird, wobei in dem Fall, dass der Betrag der Pegeldifferenz zwischen dem ersten Teilgesamtschalldruckpegel (*L*_{r*,*v}) und dem zweiten Teilgesamtschalldruckpegel (*L*_{r,n}) unterhalb des Schwellenwerts liegt, mit dem Schritt f) fortgefahren wird.

12. Verfahren gemäß einem der Ansprüche 1 bis 11, wobei das zweite Geräusch leiser als das erste Geräusch ist.

13. Vorrichtung zum Durchführen des Verfahrens gemäß einem der Ansprüche 1 bis 12, wobei die Vorrichtung eine Schallmesseinrichtung (2), die eingerichtet ist, das erste Schallsignal (*p*₁) und das zweite Schallsignal (*p*₂) aufzunehmen, und eine Regeleinrichtung (3) aufweist, die eingerichtet ist, die Schritte g) und h) durchzuführen und der Windkraftanlage (1) in Schritten a), e) und i) den Schallmodus zu kommunizieren, in der der Rotor (8) der Windkraftanlage (1) rotiert.

14. Computerprogramm, umfassend Befehle, die bei der Ausführung des Programms durch einen Computer diesen veranlassen, das Verfahren nach einem der Ansprüche 1 bis 12 auszuführen.

15. Computerlesbares Speichermedium, umfassend Befehle, die bei der Ausführung durch einen Computer diesen veranlassen, das Verfahren nach einem der Ansprüche 1 bis 12 auszuführen.
